# EUROPEAN PATENT SPECIFICATION

(11) **EP 2 739 113 B1**
(45) Date of publication and mention of the grant of the patent: **05.07.2017**
(21) Application number: 12820702.4
(22) Date of filing: 24.07.2012
(51) Int. Cl.: H04W 76/06, H04W 52/02

(54) **METHOD AND DEVICE FOR MANAGING PDN CONNECTION**
VERFAHREN UND VORRICHTUNG ZUR VERWALTUNG EINER PDN-VERBINDUNG
PROCÉDÉ ET DISPOSITIF POUR GÉRER UNE CONNEXION PDN

(30) Priority: 29.07.2011 CN 201110215097
(43) Date of publication of application: 04.06.2014
(73) Proprietor: China Academy of Telecommunications Technology, Haidian District Beijing 100191 (CN)
(72) Inventor: WANG, Hucheng, Beijing 100191 (CN)
(74) Representative: Körfer, Thomas
(86) International application number: PCT/CN2012/079086
(87) International publication number: WO 2013/017032

(56) References cited:
- EP-A1- 2 299 770
- WO-A1-2010/123643
- CN-A- 1 681 252
- CN-A- 101 005 495
- CN-A- 101 567 832
- CN-A- 102 291 295
- LG ELECTRONICS INC: "RRC Connection Release for MTC Devices", 16 August 2010 (2010-08-16), 3GPP DRAFT; R2-104562 MTC RRC CONN RELEASE_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050451732, [retrieved on 2010-08-16] * the whole document *
- "3rd Generation Partnership Project;Technical Specification Group Services and System Aspects;Service requirements for machine-type communications; Stage 1(Release 10)", 21 April 2010 (2010-04-21), 3GPP DRAFT; 22368-122 CL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050434262, [retrieved on 2010-04-21] * the whole document *

## Description

This application claims priority to Chinese Patent Application No. 201110215097.4, entitled "method and apparatus for managing a PDN connection" and filed on July, 29, 2011.

### Technical Field

The present disclosure relates to communication technologies, and more particularly, to a method and apparatus for managing a PDN connection.

### Background

In conventional Evolved Packet System (EPS) systems, Packet Data Network (PDN) connection has a characteristic of always-on, i.e. a PDN connection in a core network is always online, and the PDN connection is called persistent connectivity. Hence, once User Equipment (UE) establishes the PDN connection, a default bearer of the PDN connection is always exist in the lift time of the PDN connection.

In the EPS system, the release of the PDN connection is decided by a Mobility Management Entity (MME), or decided by a Policy and Charging Rules Function (PCRF) or a Packet Data Gateway (PGW) according to strategies of operators.

In a procedure of implementing the present disclosure, following problems of the conventional technologies are found by inventors.

The conventional PDN connection solutions are designed for communication between people, and there is no solution for managing PDN connection of a large number of Machine Type Communication (MTC) devices. Document EP 2 299 770 A1 discloses a method, apparatus and system for enabling to release PDN connections.

### Summary

Examples of the present disclosure provide a method and apparatus for managing a PDN connection, so as to manage PDN connections of a large number of MTC devices.

A method for managing a PDN connection includes:
determining, by a core network control entity, that User Equipment (UE) enters an idle state, the UE being a Machine Type Communication (MTC) device;
determining, by the core network control entity, a PDN connection corresponding to the UE as a PDN connection of a designated type; and
canceling, by the core network control entity, the PDN connection of the designated type in response to determining that the UE enters the idle state;
wherein the designated type comprises using an Access Point Name (APN) for establishing temporary connectivity.

A core network control entity includes:
a first determining module, to determine that User Equipment (UE) enters an idle state, the UE being a Machine Type Communication (MTC) device;
a second determining module, to determine a Packet Data Network (PDN) connection corresponding to the UE as a PDN connection of a designated type; and
a canceling module, to cancel the PDN connection of the designated type in response to the first determining module determining that the UE enters the idle state;
wherein the designated type comprises using an Access Point Name (APN) for establishing temporary connectivity.

A PGW includes:
a first determining module, to determine a Packet Data Network (PDN) connection corresponding to User Equipment (UE) as a PDN connection of a designated type, the UE being a Machine Type Communication (MTC) device;
a second determining module, to determine that the UE enters an idle state; and
a canceling module, to cancel the PDN connection of the designated type in response to determining that the UE enters the idle state;
wherein the designated type comprises using an Access Point Name (APN) for establishing temporary connectivity.

Compared with the conventional technologies, the present disclosure includes the following advantages.

PDN connections of a large number of MTC devices are managed effectively, resources occupied by the PDN connections are saved, it is unnecessary to spend many resources to manage the PDN connections, and performances of the system is improved.

### Brief Description of the Drawings

Figure 1 is a schematic flowchart illustrating a method for managing a PDN connection according to a first example of the present disclosure.
Figure 2 is a schematic flowchart illustrating a method for managing a PDN connection according to a second example of the present disclosure.
Figure 3 is a schematic flowchart illustrating a method for managing a PDN connection according to a third example of the present disclosure.
Figure 4 is a schematic flowchart illustrating a method for managing a PDN connection according to a fourth example of the present disclosure.
Figure 5 is a schematic flowchart illustrating a method for managing a PDN connection according to a fifth example of the present disclosure.
Figure 6 is a schematic flowchart illustrating a method for managing a PDN connection according to a sixth example of the present disclosure.
Figure 7 is a schematic diagram illustrating a core network control entity according to a seventh example of the present disclosure.
Figure 8 is a schematic diagram illustrating a PGW according to an eighth example of the present disclosure.
Figure 9 is a schematic diagram illustrating another PGW according to a ninth example of the present disclosure.

### Detailed Description

In a procedure of implementing the present disclosure, the inventor notices that, a conventional PDN connection has a characteristic of always-on and current MTC communications are provided for a large number of MTC devices. When MTC applications are different, the MTC device may spend different periods of time using the PDN connection. For example, the duration of transmitting data via a PDN connection by a certain application is far less than idle time of the PDN connection, and thus resources occupied by the PDN connection established by the application are wasted. Further, numerous MTC devices correspond to a lot of PDN connections, and thus many resources are needed to manage the PDN connections, which affects performances of the system.

Therefore, the problem of managing PDN connections corresponding to numerous MTC devices in the network needs to be solved. Examples of the present disclosure provide a method and apparatus for managing a PDN connection, so as to manage PDN connections of numerous MTC devices, save resources occupied by the PDN connections, prevent expending many resources in managing the PDN connections and improve performances of the system.

Technical solutions of the present disclosure will be illustrated in detail hereinafter with reference to the accompanying drawings. The described examples are parts of examples of the present disclosure. Other examples obtained by those skilled in the art without creative labour based on the examples of the present disclosure belong to the protection scope of the invention.

A first example is provided.

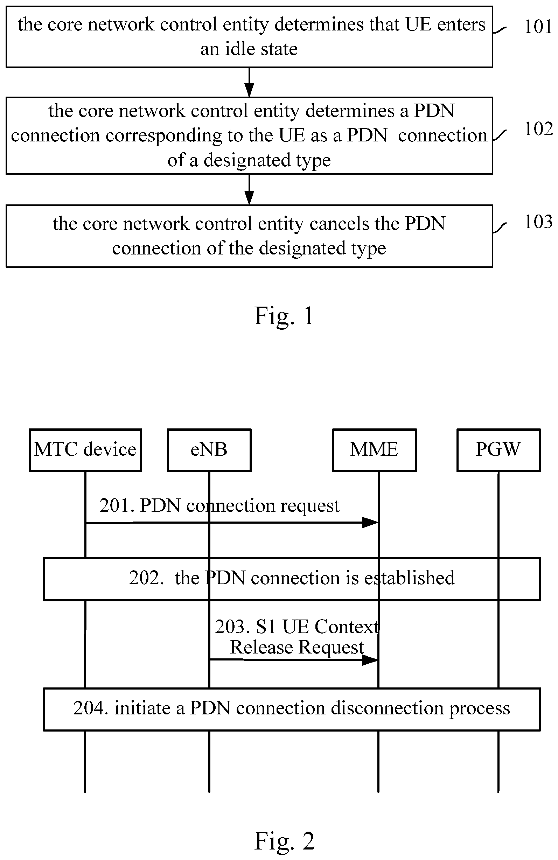

The first example provides a method for managing a PDN connection, and a core network control entity, e.g. a MME manages the PDN connection. As shown in Figure 1, the method incudes following processing.

At 101, the core network control entity determines that UE enters an idle state.

In an example, when a base station device, e.g. an eNB detects that the UE does not transmit data, the base station device transmits a S 1 UE Context Release Request to the core network control entity, and a cause value is user inactivity. When determining that the cause value is the user inactivity, the core network control entity determines that the UE enters the idle state.

At 102, the core network control entity determines a PDN connection corresponding to the UE as a PDN connection of a designated type.

In a first mode, in subscription information of the UE, an Access Point Name (APN) identifier used for establishing temporary connectivity may be configured for the APN. The temporary connectivity is a PDN connection used temporarily. In this case, when detecting that the PDN connection corresponding to the UE uses an APN for establishing the temporary connectivity, the core network control entity determines the PDN connection corresponding to the UE as the PDN connection of the designated type.

In an example of the present disclosure, at a network side, two types of APNs may be configured for the PDN connection of the UE according to application characteristics of the UE. One is an APN used for establishing "persistent connectivity", and the other is an APN used for establishing "temporary connectivity". The APN used for establishing a PDN connection of "temporary connectivity" is configured for the PDN connection of the designated type, e.g. a PDN connection of the MTC device. In the examples of the present disclosure, the APN of the first type will not be described, and the APN of the second type, i.e. the APN for establishing temporary connectivity is called MTC SPECIFIED APN.

It should be noted that, the APN refers to an access point name, and is used by the network as a parameter for selecting the PGW. In addition, the APNs with different identifiers may be used to identify different types of PDN connections. For example, an identifier of LIPA APN indicates LIPA access, and an identifier of SIPTO APN indicates SIPTO access. The APNs are identified by these identifiers stored in the subscription data of the UE.

In an example of the present disclosure, when needing to configure the APN for the PDN connection of the designated type, the APN is configured as the MTC SPECIFIED APN in the subscription information, that is, the PDN connection of the designated type will use the MTC SPECIFIED APN. Afterwards, when it is detected that the UE enters in the idle state, the APN identifier corresponding to each of the PDN connections of the UE is checked. If it is determined that the APN identifier corresponding to the PDN connection is the MTC SPECIFIED APN which is the identifier of the APN used for establishing temporary connectivity, the core network control entity determines that the PDN connection corresponding to the UE is the PDN connection of the designated type.

In a second mode, in subscription information of the UE, an attribute of infrequent data transmission may be configured for the UE according to requirements of the UE. In this case, when the core network control entity detects that the UE has the attribute of infrequent data transmission, the core network control entity determines the PDN connection corresponding to the UE as the PDN connection of the designated type.

In an example of the present disclosure, the network side may configure the attribute of infrequent data transmission for the UE (i.e. the MTC device) in the subscription information of the UE according to application characteristics of the UE. Afterwards, when it is detected that the UE enters the idle state, the subscription information of the UE is checked. If it is determined that subscription information of the UE has the attribute of infrequent data transmission, the core network control entity determines each of all normal PDN connections of the UE as the PDN connection of the designated type.

At 103, the core network control entity cancels the PDN connection of the designated type. According to various examples, the core network control entity may cancel the PDN connection of the designated type via a PDN connection disconnection procedure or via an implicit detach procedure.

In an example of the present disclosure, for the PDN connection having the APN identifier used for establishing the temporality connectivity or for all PDN connections of the UE having the attribute of infrequent data transmission, when the UE enters the idle state because of no data transmission, the network side may initiate a PDN connection disconnection procedure to release the PDN connection associated with the APN in the UE.

Afterwards, when a MTC Server needs to transmit data to the MTC device, i.e. the UE of the designated type, a MTC trigger characteristic may be used to trigger establishing of new connectivity.

Therefore, according to examples of the present disclosure, when the MTC device enters the idle state, the PDN connection disconnection procedure may be initiated to release the PDN connection, so that the PDN connection of the MTC device is managed effectively, the number of inactive PDN connections of the MTC device is reduced. When the MTC device does not often perform data transmission, the duration of accessing to the network is reduced as much as possible.

A second example is provided.

Based on the first example, the second example provides a method for managing a PDN connection, and a core network control entity, e.g. a MME manages the PDN connection. As shown in Figure 2, the method incudes following processing.

At 201, a MTC device establishes a PDN connection by using a MTC SPECIFIED APN. In an example, the MTC device may send a PDN connection request for the MTC SPECIFIED APN to the MME.

At 202, the PDN connection is established via checking subscription information of the MTC device.

At 203, when UE does not transmit data, an eNB send a S1 UE Context Release Request, the cause value is user inactivity.

At 204, the MME initiates a PDN connection disconnection procedure when determining that the cause value in the S1 UE Context Release Request is the user inactivity, so as to disconnect all PDN connections using the MTC SPECIFIED APN.

A third example is provided.

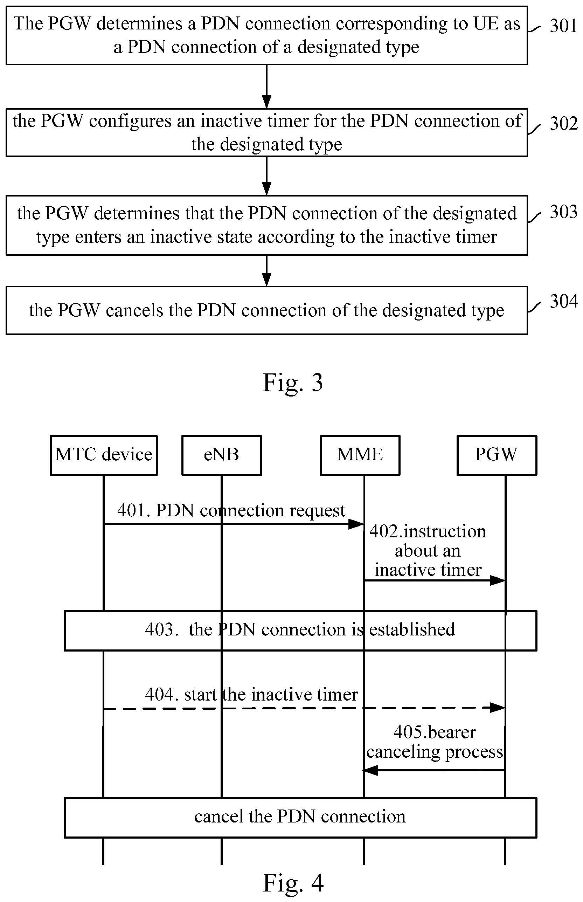

The third example provides a method for managing a PDN connection, and a PGW manages the PDN connection. As shown in Figure 3, the method incudes following processing.

At 301, the PGW determines a PDN connection corresponding to UE as a PDN connection of a designated type.

In a first mode, an APN identifier used for establishing temporary connectivity may be configured for APN in subscription information of the UE. The temporary connectivity is a PDN connection used temporarily. In this case, the PGW may receive a notification from a core network control entity. When the notification includes a first identifier indicating that the PDN connection corresponding to the UE uses an APN for establishing temporary connectivity, the PGW determines the PDN connection corresponding to the UE as the PDN connection of the designated type.

In an example of the present disclosure, at a network side, two types of APNs may be configured for the PDN connection of the UE according to application characteristics of the UE. One is an APN used for establishing "persistent connectivity", and the other is an APN used for establishing "temporary connectivity". The APN used for establishing a PDN connection of "temporary connectivity" is configured for the PDN connection of the designated type, e.g. a PDN connection of the MTC device. In the examples of the present disclosure, the APN of the first type will not be described, and the APN of the second type, i.e. the APN for establishing temporary connectivity is called MTC SPECIFIED APN.

In an example of the present disclosure, when needing to configure the APN for the PDN connection of the designated type, the APN is configured as the MTC SPECIFIED APN in the subscription information, that is, the PDN connection of the designated type will used the MTC SPECIFIED APN. The MTC SPECIFIED APN may be configured for the PDN connection of the designated type by an MME, and the MME notifies the PGW of the MTC SPECIFIED APN. For example, the MME may notify the PGW that the APN of the PDN connection is the MTC SPECIFIED APN or the MME may statically configure processing strategy for this type of APN on the PGW. Afterwards, the PGW may determine the PDN connection corresponding to the UE as the PDN connection of the designated type according to an identifier of the APN for establishing temporary connectivity.

In a second mode, in subscription information of the UE, an attribute of infrequent data transmission may be configured for the UE according to requirements of the UE. In this case, the PGW may receive a notification from the core network control entity. When the notification includes a second identifier indicating that the UE has the attribute of infrequent data transmission, the PGW determines all normal PDN connections of the UE as the PDN connection of the designated type.

In an example of the present disclosure, the network side may configure the attribute of infrequent data transmission for the UE (i.e. the MTC device) in the subscription information of the UE according to application characteristics of the UE. According to an example, the MME may configure the attribute of infrequent data transmission for the UE and notify the PGW. For example, the MME may notify the PGW that the UE has the attribute of infrequent data transmission. The PGW determines all normal PDN connections of the UE as the PDN connection of the designated type.

At 302, the PGW configures an inactive timer for the PDN connection of the designated type.

In an example of the present disclosure, after the PDN connection is determined as the PDN connection of the designated type, the PGW configures the inactive timer for the PDN connection of the designated type, starts the inactive timer when detecting that no data is transmitted via the PDN connection, and resets the inactive timer when detecting that data is transmitted via the PDN connection again.

At 303, the PGW determines that the PDN connection of the designated type enters an inactive state according to the inactive timer. According to an example, after the inactive timer expires, the PGW determines that the PDN connection of the designated type enters the inactive state.

At 304, the PGW cancels the PDN connection of the designated type. According to various examples, the PGW cancels the PDN connection of the designated type via a bearer deactivation procedure, that is, the PGW initiates a bearer deactivation procedure to deactivate the default bearer of the PDN connection.

Afterwards, when the MTC server needs to transmit data to the MTC device, i.e. the UE of the designated type, the MTC trigger characteristics may be used to initiate establishing of a new connectivity.

Therefore, according to examples of the present disclosure, on the PGW, the inactive timer is configured for the PDN connection of the MTC device. When the inactive timer expires, the PDN connection is released, so that the PDN connection of the MTC device is managed effectively, the number of inactive PDN connections of the MTC device is reduced. When the MTC device does not often perform data transmission, the duration of accessing to the network is reduced as much as possible.

A fourth example is provided.

Based on the third example, the fourth example provides a method for managing a PDN connection, and a PGW manages the PDN connection. As shown in Figure 4, the method incudes following processing.

At 401, a MTC device establishes a PDN connection by using a MTC SPECIFIED APN. In an example, the MTC device may send a PDN connection request for the MTC SPECIFIED APN to a MME.

At 402, the MME checks subscription information, notifies the PGW to start an inactive timer for the APN after data transmission is completed. Further, the MME may notify the PGW of the timer value.

At 403, the PDN connection is established.

At 404, after the data transmission is completed, the PGW starts the inactive timer, and a timer value is decided according to configuration.

At 405, after the inactive timer expires, the PGW initiates a bearer canceling procedure to cancel the default bearer, so as to cancel the PDN connection.

It should be noted that, if data transmission is performed via the PDN connection again before the inactive timer expires, the inactive timer is reset.

A fifth example is provided.

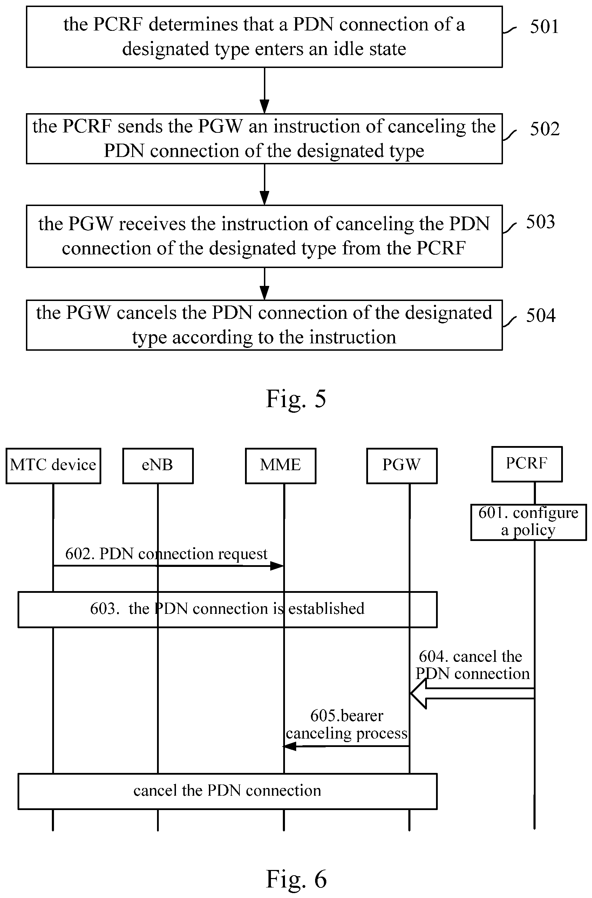

The fifth example provides a method for managing a PDN connection, and a PCRF and a PGW manage the PDN connection. As shown in Figure 5, the method incudes following processing.

At 501, the PCRF determines that a PDN connection of a designated type enters an idle state.

According to an example, the PCRF may determine that the PDN connection of the designated type enters the idle state by using modes as described in the above examples.

At 502, the PCRF sends the PGW an instruction of canceling the PDN connection of the designated type.

According to an example, a policy for the MTC SPECIFIED APN may be configured on the PCRF, so that the PCRF may send the instruction of canceling the PDN connection of the designated type to the PGW after the transmission on the PDN connection is completed for a preset time period.

At 503, the PGW receives the instruction of canceling the PDN connection of the designated type from the PCRF.

At 504, the PGW cancels the PDN connection of the designated type according to the instruction. According to an example, the PGW may cancel the PDN connection of the designated type via a bearer deactivation procedure, e.g. the PGW initiates a bearer deactivation procedure to deactivate the default bearer of the PDN connection.

A sixth example is provided.

Based on the above example, the sixth example provides a method for managing a PDN connection, and a PCRF and a PGW manage the PDN connection. As shown in Figure 6, the method incudes following processing.

At 601, the PCRF is configured with a policy in which an instruction of canceling a PDN connection is sent after a PDN connection using a MTC SPECIFIED APN enters an idle state for a certain time period.

At 602, a MTC device establishes a PDN connection by using a MTC SPECIFIED APN. According to an example, the MTC device may send the MME a PDN connection request for the MTC SPEIFIED APN.

At 603, the PDN connection is established.

At 604, after detecting that the PDN connection enters the idle state for a certain time period, the PCRF sends an instruction of canceling the PDN connection to a PGW.

At 605, the PGW receives the instruction of canceling the PDN connection, initiates a bearer canceling procedure to cancel the default bearer, so as to cancel the PDN connection.

A seventh example is provided.

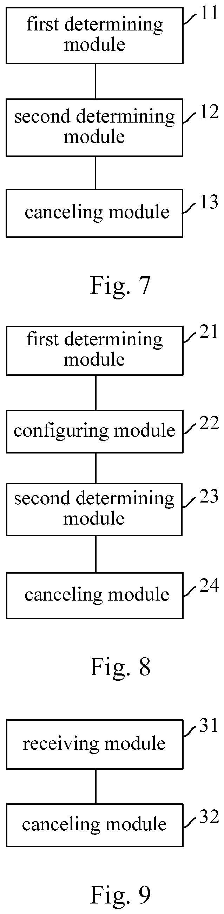

Based on the same inventive concept, the examples of the present disclosure also provide a core network control entity, as shown in Figure 7. The core network control entity includes a first determining module 11, a second determining module 12, and a canceling module 13.

The first determining module 11 is to determine that UE enters an idle state.

The second determining module 12 is to determine a PDN connection corresponding to the UE as a PDN connection of a designated type.

The canceling module 13 is to cancel the PDN connection of the designated type.

According to an example, the second determining module 12 is to determine the PDN connection corresponding to the UE as the PDN connection of the designated type when the PDN connection corresponding to the UE uses an APN for establishing temporary connectivity.

It should be noted that, an APN identifier used for establishing temporary connectivity may be configured for the APN in subscription information of the UE.

According to an example, the second determining module 12 is to determine each of normal PDN connections of the UE as the PDN connection of the designated type, when the UE has an attribute of infrequent data transmission.

It should be noted that, the attribute of infrequent data transmission is configured for the UE in subscription information of the UE according to requirements of the UE.

According to an example, the canceling module 13 is to cancel the PDN connection of the designated type via a PDN connection disconnection procedure or via an implicit detach procedure.

According to examples of the present disclosure, the modules in the core network control entity may be located together or separately. The above modules may be merged into one module, or may be divided into multiple sub-modules furthermore.

An eighth example is provided.

Based on the same inventive concept, the examples of the present disclosure also provide a PGW, as shown in Figure 8. The PGW includes a first determining module 21, a configuring module 22, a second determining module 23, and a canceling module 24.

The first determining module 21 is to determine a PDN connection corresponding to UE as a PDN connection of a designated type.

The configuring module 22 is to configure an inactive timer for the PDN connection of the designated type.

The second determining module 23 is to determine that the PDN connection of the designated type enters an inactive state according to the inactive timer.

The canceling module 24 is to cancel the PDN connection of the designated type.

According to an example, the first determining module 21 is to receive a notification from a core network control entity; determine the PDN connection corresponding to UE as the PDN connection of the designated type, when the notification includes a first identifier indicating that the PDN connection uses an APN for establishing temporary connectivity.

It should be noted that, in subscription information of the UE, an APN identifier used for establishing temporary connectivity may be configured for the APN.

According to an example, the first determining module 21 is to receive a notification from the core network control entity; determine each of normal PDN connections of the UE as the PDN connection of the designated type, when the notification includes a second identifier indicating that the UE has an attribute of infrequent data transmission.

It should be noted that, in subscription information of the UE, the attribute of infrequent data transmission may be configured for the UE according to requirements of the UE.

According to an example, the canceling module is to cancel the PDN connection of the designated type via a bearer deactivation procedure.

According to examples of the present disclosure, the modules in the core network control entity may be located together or separately. The above modules may be merged into one module, or may be divided into multiple sub-modules furthermore.

A ninth example is provided.

Based on the same inventive concept, the examples of the present disclosure also provide a PGW, as shown in Figure 9. The PGW includes a receiving module 31 and a canceling module 32.

The receiving module 31 is to receive an instruction of canceling a PDN connection of a designated type from a PCRF, when the PDN connection of the designated type enters an idle state.

The canceling module 32 is to cancel the PDN connection of the designated type according to the instruction.

According to an example, the canceling module 32 may cancel the PDN connection of the designated type via a bearer deactivation procedure.

According to examples of the present disclosure, the modules in the core network control entity may be located together or separately. The above modules may be merged into one module, or may be divided into multiple sub-modules furthermore.

According to the above descriptions of examples, it can be clearly understood by those skilled in the art that the present invention can be realized by software accompanying with necessary general hardware platforms, or by hardware. In many cases, the former is a preferred manner. Based on this, the essential part of the technical solution of the present invention or the part contributed to the prior art can be in the form of a software product, and the computer software product is stored in a storage medium and includes several codes to make a computer device (such as a handset, a personal computer, a server or a network device) perform the method in embodiments of the present invention.

Persons having ordinary skill in the art may easily learn that the accompanying drawings are only schematic diagrams of a preferred embodiment. The modules or processes illustrated in the accompanying drawings are not definitely necessary to implement the present invention.

Persons having ordinary skill in the art may understand that the modules in the device embodiment may be distributed in the device of the embodiment according to embodiment descriptions, or may change correspondingly to locate in one or more devices different from the embodiment. The modules in above embodiment may be merged into one module, or may be divided into multiple sub-modules furthermore.

Sequence number in above embodiments of the present invention is only used for descriptions, which doesn't demonstrate good or better embodiment.

## Claims

1. A method for managing a Packet Data Network, PDN, connection, comprising:
determining, by a core network control entity, that User Equipment, UE, enters an idle state, the UE being a Machine Type Communication, MTC, device;
determining, by the core network control entity, a PDN connection corresponding to the UE as a PDN connection of a designated type; and
canceling, by the core network control entity, the PDN connection of the designated type in response to determining that the UE enters the idle state;
wherein the designated type comprises using an Access Point Name, APN, for establishing temporary connectivity.

2. The method of claim 1, wherein determining, by the core network control entity, the PDN connection corresponding to the UE as the PDN connection of the designated type comprises:
determining the PDN connection corresponding to the UE as the PDN connection of the designated type, when the PDN connection corresponding to the UE uses the APN for establishing the temporary connectivity.

3. The method of claim 2, wherein
an APN identifier used for establishing the temporary connectivity is configured for the APN in subscription information of the UE.

4. The method of claim 1, wherein the designated type further comprises being a normal PDN connection of the UE, the UE having an attribute of infrequent data transmission, and determining, by the core network control entity, the PDN connection corresponding to the UE as the PDN connection of the designated type further comprises:
determining the PDN connection corresponding to the UE as the PDN connection of the designated type, when the UE has the attribute of infrequent data transmission and the PDN connection corresponding to the UE is the normal PDN connection of the UE.

5. The method of claim 4, wherein
the attribute of infrequent data transmission is configured for the UE in subscription information of the UE according to requirements of the UE.

6. The method of claim 1, wherein after determining, by the core network control entity, the PDN connection corresponding to the UE as the PDN connection of the designated type, the method further comprises:
determining, by a Packet Data Gateway, PGW, the PDN connection corresponding to UE as the PDN connection of the designated type;
configuring, by the PGW, an inactive timer for the PDN connection of the designated type; and
determining, by the PGW, that the PDN connection of the designated type enters an inactive state according to the inactive timer.

7. The method of claim 6, wherein determining, by the PGW, that the PDN connection corresponding to the UE as the PDN connection designated type comprises:
receiving, by the PGW, a notification from the core network control entity; and
determining the PDN connection corresponding to the UE as the PDN connection of the designated type, when the notification comprises a first identifier indicating that the PDN connection corresponding to the UE uses the APN for establishing the temporary connectivity.

8. The method of claim 7, wherein
an APN identifier used for establishing the temporary connectivity is configured for the APN in subscription information of the UE.

9. The method of claim 6, wherein determining, by the PGW, that the PDN connection corresponding to the UE as the PDN connection designated type comprises:
receiving, by the PGW, a notification from the core network control entity; and
determining the PDN connection corresponding to the UE as the PDN connection of the designated type, when the notification comprises a second identifier indicating that the UE has an attribute of infrequent data transmission.

10. The method of claim 9, wherein
the attribute of infrequent data transmission is configured for the UE in subscription information of the UE according to requirements of the UE.

11. The method of claim 1, wherein canceling, by the core network control entity, the PDN connection of the designated type comprises:
receiving, by a PGW, an instruction of canceling the PDN connection of the designated type from a Policy and Charging Rules Function, PCRF, unit, when the PDN connection of the designated type enters an inactive state; and
canceling, by the PGW, the PDN connection of the designated type according to the instruction.

12. A core network control entity, comprising:
a first determining module, to determine that User Equipment, UE,. enters an idle state, the UE being a Machine Type Communication, MTC, device;
a second determining module, to determine a Packet Data Network, PDN, connection corresponding to the UE as a PDN connection of a designated type; and
a canceling module, to cancel the PDN connection of the designated type in response to the first determining module determining that the UE enters the idle state;
wherein the designated type comprises using an Access Point Name, APN for establishing temporary connectivity.

13. The core network control entity of claim 12, wherein
the second determining module is to determine the PDN connection corresponding to the UE as the PDN connection of the designated type when the PDN connection corresponding to the UE uses the APN for establishing the temporary connectivity.

14. The core network control entity of claim 13, wherein
an APN identifier used for establishing the temporary connectivity is configured for the APN in subscription information of the UE.

15. The core network control entity of claim 12, wherein the designated type further comprises being a normal PDN connection of the UE, the UE having an attribute of infrequent data transmission, and the second determining module is further to determine the PDN connection corresponding to the UE as the PDN connection of the designated type, when the UE has the attribute of infrequent data transmission and the PDN connection corresponding to the UE is the normal PDN connection of the UE.

16. The core network control entity of claim 15, wherein
the attribute of infrequent data transmission is configured for the UE in subscription information of the UE according to requirements of the UE.

17. A Packet Data Gateway, PGW, comprising:
a first determining module, to determine a Packet Data Network, PDN, connection corresponding to User Equipment, UE, as a PDN connection of a designated type, the UE being a Machine Type Communication, MTC, device;
a second determining module, to determine that the UE enters an idle state; and
a canceling module, to cancel the PDN connection of the designated type in response to determining that the UE enters the idle state;
wherein the designated type comprises using an Access Point Name, APN, for establishing temporary connectivity.

18. The PGW of claim 17, wherein the PGW further comprises: a configuring module, to configure an inactive timer for the PDN connection of the designated type; and
wherein the second determining module is further to determine that the PDN connection of the designated type enters an inactive state according to the inactive timer.

19. The PGW of claim 18, wherein the first determining module is to
receive a notification from a core network control entity; and
determine the PDN connection corresponding to the UE as the PDN connection of the designated type, when the notification comprises a first identifier indicating that the PDN corresponding to the UE connection uses the APN for establishing the temporary connectivity.

20. The PGW of claim 19, wherein
an APN identifier used for establishing the temporary connectivity is configured for the APN in subscription information of the UE.

21. The PGW of claim 18, wherein the designated type further comprises being a normal PDN connection of the UE, the UE having an attribute of infrequent data transmission, and the first determining module is further to:
receive a notification from the core network control entity; and
determine the PDN connection corresponding to the UE as the PDN connection of the designated type, when the notification comprises a second identifier indicating that the UE has the attribute of infrequent data transmission and the PDN connection corresponding to the UE is the normal PDN connection of the UE.

22. The PGW of claim 21, wherein
the attribute of infrequent data transmission is configured for the UE in subscription information of the UE according to requirements of the UE.

## Patentansprüche

1. Verfahren zum Verwalten einer Paketdaten-Netzwerk-PDN-Verbindung, umfassend,
Bestimmen durch eine Kernnetzwerk-Steuereinheit, dass ein Benutzergerät, UE, in einen Ruhezustand eintritt, wobei das UE-Benutzergerät eine Vorrichtung vom Kommunikations-Maschinentyp MTC, ist,
Bestimmen einer PDN-Verbindung entsprechend dem UE-Benutzergerät durch die Kernnetzwerk-Steuereinheit als eine PDN-Verbindung eines bestimmten Typs
und Auflösen der PDN-Verbindung des bestimmten Typs durch die Kernnetzwerk-Steuereinheit auf die Bestimmung hin, dass das UE-Benutzergerät in den Ruhezustand eintritt,
wobei der bestimmte Typ die Verwendung eines eine temporäre Verbindungsfähigkeit herstellenden Zugriffspunkt-Namens, APN, umfasst.

2. Verfahren nach Anspruch 1, wobei das Bestimmen der PDN-Verbindung entsprechend dem UE-Benutzergerät durch die Kernnetzwerk-Steuereinheit als die PDN-Verbindung bestimmten Typs umfasst:
Bestimmen der PDN-Verbindung entsprechend dem UE-Benutzergerät als die PDN-Verbindung des bestimmten Typs, wenn die dem UE-Benutzergerät entsprechende PDN-Verbindung den APN-Namen zur Herstellung der temporären Verbindungsfähigkeit verwendet.

3. Verfahren nach Anspruch 2, wobei ein zur Herstellung der temporären Verbindungsfähigkeit verwendeter APN-Identifizierer für den APN-Namen in einer Subskriptionsinformation des UE-Benutzergeräts ausgelegt ist.

4. Verfahren nach Anspruch 1, wobei der bestimmte Typ in dem Fall, dass er eine normale PDN-Verbindung des UE-Benutzergeräts ist, ferner umfasst, dass das UE-Benutzergerät ein Merkmal einer gelegentlichen Datenübertragung aufweist, und dass die Bestimmung der PDN-Verbindung entsprechend dem UE-Benutzergerät durch die Kernnetzwerk-Steuereinheit als die PDN-Verbindung bestimmten Typs ferner umfasst:
Bestimmen der PDN-Verbindung entsprechend dem UE-Benutzergerät als die PDN-Verbindung des bestimmten Typs, wenn das UE-Benutzergerät das Merkmal einer gelegentlichen Datenübertragung aufweist und die dem UE-Benutzergerät entsprechende PDN-Verbindung die normale PDN-Verbindung des UE-Benutzergeräts ist.

5. Verfahren nach Anspruch 4, wobei das Merkmal der gelegentlichen Datenübertragung für das UE-Benutzergerät in der Subskriptionsinformation des UE-Benutzergeräts entsprechend dessen Anforderungen konfiguriert ist.

6. Verfahren nach Anspruch 1, wobei das Verfahren nach dem Bestimmen der PDN-Verbindung entsprechend dem UE-Benutzergerät durch die Kernnetzwerk-Steuereinheit als die PDN-Verbindung des bestimmten Typs ferner umfasst:
Bestimmen der PDN-Verbindung entsprechend dem UE-Benutzergerät durch ein Paketdaten-Gateway, PGW, als die PDN-Verbindung des bestimmten Typs,
Konfigurieren eines inaktiven Zeitgebers für die PDN-Verbindung des bestimmten Typs durch das PGW-Gateway und Bestimmen durch das PGW-Gateway, dass die PDN-Verbindung des bestimmten Typs gemäß dem inaktiven Zeitgeber in einen inaktiven Zustand eintritt.

7. Verfahren nach Anspruch 6, wobei das Bestimmen der PDN-Verbindung entsprechend dem UE-Benutzergerät durch das PGW-Gateway als die PDN-Verbindung des bestimmten Typs umfasst:
Empfangen einer Meldung durch das PGW-Gateway von der Kernnetzwerk-Steuereinheit
und Bestimmen der PDN-Verbindung entsprechend dem UE-Benutzergerät als die PDN-Verbindung des bestimmten Typs, wenn die Meldung einen ersten Identifizierer umfasst, der angibt, dass die PDN-Verbindung entsprechend dem UE-Benutzergerät den APN-Namen zur Herstellung der temporären Verbindungsfähigkeit verwendet.

8. Verfahren nach Anspruch 7, wobei ein zur Herstellung der temporären Verbindungsfähigkeit verwendeter APN-Identifizierer für den APN-Namen in der Subskriptionsinformation des UE-Benutzergeräts konfiguriert ist.

9. Verfahren nach Anspruch 6, wobei das Bestimmen der PDN-Verbindung entsprechend dem UE-Benutzergerät durch das PGW-Gateway als die PDN-Verbindung des bestimmten Typs umfasst:
Empfangen einer Meldung durch das PGW-Gateway von der Kernnetzwerk-Steuereinheit
und Bestimmen der PDN-Verbindung entsprechend dem UE-Benutzergerät als die PDN-Verbindung des bestimmten Typs, wenn die Meldung einen zweiten Identifizierer umfasst, der angibt, dass das UE-Benutzergerät ein Merkmal gelegentlicher Datenübertragung aufweist.

10. Verfahren nach Anspruch 9, wobei das Merkmal der gelegentlichen Datenübertragung für das UE-Benutzergerät in der Subskriptionsinformation des UE-Benutzergeräts entsprechend Anforderungen des UE-Benutzergeräts konfiguriert ist.

11. Verfahren nach Anspruch 1, wobei das Auflösen der PDN-Verbindung des bestimmten Typs durch die Kernnetzwerk-Steuereinheit umfasst:
Empfangen eines Befehls zum Auflösen der PDN-Verbindung des bestimmten Typs durch ein PGW-Gateway von einer Richtlinien- und Belastungsregeln-Funktions-PCRF-Einheit, wenn die PDN-Verbindung des bestimmten Typs in einen inaktiven Zustand eintritt,
und Auflösen der PDN-Verbindung des bestimmten Typs durch das PGW-Gateway gemäß dem Befehl.

12. Kernnetzwerk-Steuereinheit, umfassend:
ein erstes Bestimmungsmodul zum Bestimmen, dass ein Benutzergerät, UE, in einen Ruhezustand eintritt, wobei das UE-Benutzergerät eine Vorrichtung des Kommunikations-Maschinentyps, MTC, ist,
ein zweites Bestimmungsmodul zum Bestimmen einer Paketdaten-Netzwerk-PDN-Verbindung entsprechend dem UE-Benutzergerät als eine PDN-Verbindung eines bestimmten Typs
und ein Auflösungsmodul zum Auflösen der PDN-Verbindung des bestimmten Typs daraufhin, dass das erste Bestimmungsmodul bestimmt, dass das UE-Benutzergerät in den Ruhezustand eintritt, wobei der bestimmte Typ die Verwendung eines Zugangspunkt-Namens, APN, zur Herstellung einer temporären Verbindungsfähigkeit verwendet.

13. Kernnetzwerk-Steuereinheit nach Anspruch 12, wobei das zweite Bestimmungsmodul vorgesehen ist, um die PDN-Verbindung entsprechend dem UE-Benutzergerät als die PDN-Verbindung des bestimmten Typs zu bestimmen, wenn die PDN-Verbindung entsprechend dem UE-Benutzergerät den APN-Namen zur Herstellung der temporären Verbindungsfähigkeit verwendet.

14. Kernnetzwerk-Steuereinheit nach Anspruch 13, wobei ein zur Herstellung der temporären Verbindungsfähigkeit verwendeter APN-Identifizierer für den APN-Namen in einer Subskriptionsinformation des UE-Benutzergeräts konfiguriert ist.

15. Kernnetzwerk-Steuereinheit nach Anspruch 12, wobei der bestimmte Typ in dem Fall, dass er eine normale PDN-Verbindung des UE-Benutzergeräts ist, ferner umfasst, dass das UE-Benutzergerät ein Merkmal gelegentlicher Datenübertragung aufweist, und wobei das zweite Bestimmungsmodul ferner dazu vorgesehen ist, die PDN-Verbindung entsprechend dem UE-Benutzergerät als die PDN-Verbindung des bestimmten Typs zu bestimmen, wenn das UE-Benutzergerät das Merkmal der gelegentlichen Datenübertragung aufweist und die PDN-Verbindung entsprechend dem UE-Benutzergerät die normale PDN-Verbindung des UE-Benutzergeräts ist.

16. Kernnetzwerk-Steuereinheit nach Anspruch 15, wobei das Merkmal der gelegentlichen Datenübertragung für das UE-Benutzergerät in der Subskriptionsinformation des UE-Benutzergeräts gemäß Anforderungen des UE-Benutzergeräts konfiguriert ist.

17. Paketdaten-Gateway, PGW, umfassend:
ein erstes Bestimmungsmodul zum Bestimmen einer Paketdaten-Netzwerk-PDN-Verbindung entsprechend einem Benutzergerät, UE, als eine PDN-Verbindung eines bestimmten Typs, wobei das UE-Benutzergerät eine Vorrichtung des Kommunikations-Maschinentyps, MTC, ist,
ein zweites Bestimmungsmodul zum Bestimmen, dass das UE-Benutzergerät in einen Ruhezustand eintritt,
und ein Auflösungsmodul zum Auflösen der PDN-Verbindung des bestimmten Typs auf die Bestimmung hin, dass das UE-Benutzergerät in den Ruhezustand eintritt, wobei der bestimmte Typ die Verwendung eines Zugangspunkt-Namens, APN, zur Herstellung einer temporären Verbindungsfähigkeit umfasst.

18. PGW-Gateway nach Anspruch 17, wobei das PGW-Gateway ferner umfasst:
ein Konfigurationsmodul zum Konfigurieren eines Inaktiv-Zeitgebers für die PDN-Verbindung des bestimmten Typs, wobei das zweite Bestimmungsmodul ferner dazu vorgesehen ist, zu bestimmen, dass die PDN-Verbindung des bestimmten Typs entsprechend dem Inaktiv-Zeitgeber in einen inaktiven Zustand eintritt.

19. PGW-Gateway nach Anspruch 18, wobei das erste Bestimmungsmodul dazu vorgesehen ist, eine Meldung von einer Kernnetzwerk-Steuereinheit zu empfangen und die PDN-Verbindung entsprechend dem UE-Benutzergerät als die PDN-Verbindung des bestimmten Typs zu bestimmen, wenn die Meldung einen ersten Identifizierer umfasst, der angibt, dass die PDN-Verbindung entsprechend dem UE-Benutzergerät den APN-Namen zur Herstellung der temporären Verbindungsfähigkeit verwendet.

20. PGW-Gateway nach Anspruch 19, wobei ein zur Herstellung der temporären Verbindungsfähigkeit verwendeter APN-Identifizierer für den APN-Namen in einer Subskriptionsinformation des UE-Benutzergeräts konfiguriert ist.

21. PGW-Gateway nach Anspruch 18, wobei der bestimmte Typ ferner in dem Fall, dass er eine normale PDN-Verbindung des UE-Benutzergeräts ist, umfasst, dass das UE-Benutzergerät ein Merkmal einer gelegentlichen Datenübertragung aufweist,
und wobei das erste Bestimmungsmodul ferner vorgesehen ist, um eine Meldung von der Kernnetzwerk-Steuereinheit zu empfangen und um die PDN-Verbindung entsprechend dem UE-Benutzergerät als die PDN-Verbindung des bestimmten Typs zu bestimmen, wenn die Meldung einen zweiten Identifizierer umfasst, der angibt, dass das UE-Benutzergerät das Merkmal gelegentlicher Datenübertragung aufweist und die PDN-Verbindung entsprechend dem UE-Benutzergerät die normale PDN-Verbindung des UE-Benutzergeräts ist.

22. PGW-Gateway nach Anspruch 21, wobei das Merkmal gelegentlicher Datenübertragung für das UE-Benutzergerät in der Subskriptionsinformation des UE-Benutzergeräts entsprechend Anforderungen des UE-Benutzergeräts konfiguriert ist.

## Revendications

1. Procédé de gestion d'une connexion de réseau de données en paquets, PDN, comprenant les étapes ci-dessous consistant à :
déterminer, par le biais d'une entité de commande de réseau central, qu'un équipement d'utilisateur, UE, entre dans un état de repos, l'équipement UE correspondant à un dispositif de communication de type machine, MTC ;
déterminer, par le biais de l'entité de commande de réseau central, une connexion de réseau PDN correspondant à l'équipement UE, comme étant une connexion de réseau PDN d'un type désigné ; et
supprimer, par le biais de l'entité de commande de réseau central, la connexion de réseau PDN du type désigné en réponse à la détermination selon laquelle l'équipement UE entre dans l'état de repos ;
dans lequel le type désigné comprend l'utilisation d'un nom de point d'accès, APN, en vue d'établir une connectivité temporaire.

2. Procédé selon la revendication 1, dans lequel l'étape consistant à déterminer, par le biais de l'entité de commande de réseau central, la connexion de réseau PDN correspondant à l'équipement UE comme étant la connexion de réseau PDN du type désigné, comprend l'étape ci-dessous consistant à :
déterminer la connexion de réseau PDN correspondant à l'équipement UE comme étant la connexion de réseau PDN du type désigné, lorsque la connexion de réseau PDN correspondant à l'équipement UE utilise le nom APN en vue d'établir la connectivité temporaire.

3. Procédé selon la revendication 2, dans lequel :
un identifiant de nom APN utilisé en vue d'établir la connectivité temporaire est configuré pour le nom APN dans des informations d'abonnement de l'équipement UE.

4. Procédé selon la revendication 1, dans lequel le type désigné implique en outre qu'il s'agisse d'une connexion de réseau PDN normale de l'équipement UE, l'équipement UE présentant un attribut de transmission de données non fréquente, et dans lequel l'étape consistant à déterminer, par le biais de l'entité de commande de réseau central, la connexion de réseau PDN correspondant à l'équipement UE comme étant la connexion de réseau PDN du type désigné, comporte en outre l'étape ci-dessous consistant à :
déterminer la connexion de réseau PDN correspondant à l'équipement UE comme étant la connexion de réseau PDN du type désigné, lorsque l'équipement UE présente l'attribut de transmission de données non fréquente et lorsque la connexion de réseau PDN correspondant à l'équipement UE est la connexion de réseau PDN normale de l'équipement UE.

5. Procédé selon la revendication 4, dans lequel :
l'attribut de transmission de données non fréquente est configuré pour l'équipement UE dans des informations d'abonnement de l'équipement UE selon des exigences de l'équipement UE.

6. Procédé selon la revendication 1, dans lequel, suite à l'étape consistant à déterminer, par le biais de l'entité de commande de réseau central, la connexion de réseau PDN correspondant à l'équipement UE comme étant la connexion de réseau PDN du type désigné, le procédé comporte en outre les étapes ci-dessous consistant à :
déterminer, par le biais d'une passerelle de données en paquets, PGW, la connexion de réseau PDN correspondant à l'équipement UE comme étant la connexion de réseau PDN du type désigné ;
configurer, par le biais de la passerelle PGW, un temporisateur inactif pour la connexion de réseau PDN du type désigné ; et
déterminer, par le biais de la passerelle PGW, que la connexion de réseau PDN du type désigné entre dans un état inactif selon le temporisateur inactif.

7. Procédé selon la revendication 6, dans lequel l'étape consistant à déterminer, par le biais de la passerelle PGW, la connexion de réseau PDN correspondant à l'équipement UE comme étant la connexion de réseau PDN du type désigné, comporte les étapes ci-dessous consistant à :
recevoir, par le biais de la passerelle PGW, une notification en provenance de l'entité de commande de réseau central ; et
déterminer la connexion de réseau PDN correspondant à l'équipement UE comme étant la connexion de réseau PDN du type désigné, lorsque la notification comporte un premier identifiant indiquant que la connexion de réseau PDN correspondant à l'équipement UE utilise le nom APN en vue d'établir la connectivité temporaire.

8. Procédé selon revendication 7, dans lequel :
un identifiant de nom APN utilisé en vue d'établir la connectivité temporaire est configuré pour le nom APN dans des informations d'abonnement de l'équipement UE.

9. Procédé selon la revendication 6, dans lequel l'étape consistant à déterminer, par le biais de la passerelle PGW, la connexion de réseau PDN correspondant à l'équipement UE comme étant la connexion de réseau PDN du type désigné, comporte les étapes ci-dessous consistant à :
recevoir, par le biais de la passerelle PGW, une notification en provenance de l'entité de commande de réseau central ; et
déterminer la connexion de réseau PDN correspondant à l'équipement UE comme étant la connexion de réseau PDN du type désigné, lorsque la notification comporte un second identifiant indiquant que l'équipement UE présente un attribut de transmission de données non fréquente.

10. Procédé selon revendication 9, dans lequel :
l'attribut de transmission de données non fréquente est configuré pour l'équipement UE dans des informations d'abonnement de l'équipement UE selon des exigences de l'équipement UE.

11. Procédé selon la revendication 1, dans lequel l'étape consistant à supprimer, par le biais de l'entité de commande de réseau central, la connexion de réseau PDN du type désigné, comprend les étapes ci-dessous consistant à :
recevoir, par le biais d'une passerelle PGW, une instruction visant à supprimer la connexion de réseau PDN du type désigné, d'une unité de fonction de règles de taxation et de politique, PCRF, lorsque la connexion de réseau PDN du type désigné entre dans un état inactif ; et
supprimer, par le biais de la passerelle PGW, la connexion de réseau PDN du type désigné, selon l'instruction.

12. Entité de commande de réseau central, comprenant :
un premier module de détermination destiné à déterminer qu'un équipement d'utilisateur, UE, entre dans un état de repos, l'équipement UE étant un dispositif de communication de type machine, MTC ;
un second module de détermination destiné à déterminer une connexion de réseau de données en paquets, PDN, correspondant à l'équipement UE comme étant une connexion de réseau PDN d'un type désigné ; et
un module de suppression destiné à supprimer la connexion de réseau PDN du type désigné en réponse au fait que le premier module de détermination détermine que l'équipement UE entre dans l'état de repos ;
dans lequel le type désigné comprend l'utilisation d'un nom de point d'accès, APN, en vue d'établir une connectivité temporaire.

13. Entité de commande de réseau central selon la revendication 12, dans laquelle :
le second module de détermination est destiné à déterminer la connexion de réseau PDN correspondant à l'équipement UE comme étant la connexion de réseau PDN du type désigné, lorsque la connexion de réseau PDN correspondant à l'équipement UE utilise le nom APN en vue d'établir la connectivité temporaire.

14. Entité de commande de réseau central selon la revendication 13, dans laquelle :
un identifiant de nom APN utilisé en vue d'établir la connectivité temporaire est configuré pour le nom APN dans des informations d'abonnement de l'équipement UE.

15. Entité de commande de réseau central selon la revendication 12, dans laquelle le type désigné implique en outre qu'il s'agisse d'une connexion de réseau PDN normale de l'équipement UE, l'équipement UE présentant un attribut de transmission de données non fréquente, et dans laquelle le second module de détermination est en outre destiné à déterminer la connexion de réseau PDN correspondant à l'équipement UE comme étant la connexion de réseau PDN du type désigné, lorsque l'équipement UE présente l'attribut de transmission de données non fréquente, et lorsque la connexion de réseau PDN correspondant à l'équipement UE est la connexion de réseau PDN normale de l'équipement UE.

16. Entité de commande de réseau central selon la revendication 15, dans laquelle :
l'attribut de transmission de données non fréquente est configuré pour l'équipement UE dans des informations d'abonnement de l'équipement UE selon des exigences de l'équipement UE.

17. Passerelle de données en paquets, PGW, comprenant :
un premier module de détermination destiné à déterminer une connexion de réseau de données en paquets, PDN, correspondant à un équipement d'utilisateur, UE, comme étant une connexion de réseau PDN d'un type désigné, l'équipement UE étant un dispositif de communication de type machine, MTC ;
un second module de détermination destiné à déterminer que l'équipement UE entre dans un état de repos ; et
un module de suppression destiné à supprimer la connexion de réseau PDN du type désigné en réponse à une détermination selon laquelle l'équipement UE entre dans l'état de repos ;
dans laquelle le type désigné comprend l'utilisation d'un nom de point d'accès, APN, en vue d'établir une connectivité temporaire.

18. Passerelle PGW selon la revendication 17, dans laquelle la passerelle PGW comporte en outre : un module de configuration destiné à configurer un temporisateur inactif pour la connexion de réseau PDN du type désigné ; et
dans lequel le second module de détermination est en outre destiné à déterminer que la connexion de réseau PDN du type désigné entre dans un état inactif selon le temporisateur inactif.

19. Passerelle PGW selon la revendication 18, dans laquelle le premier module de détermination est destiné à :
recevoir une notification en provenance d'une entité de commande de réseau central ; et
déterminer la connexion de réseau PDN correspondant à l'équipement UE comme étant la connexion de réseau PDN du type désigné, lorsque la notification comporte un premier identifiant indiquant que le réseau PDN correspondant à la connexion d'équipement UE utilise le nom APN en vue d'établir la connectivité temporaire.

20. Passerelle PGW selon la revendication 19, dans laquelle :
un identifiant de nom APN utilisé en vue d'établir la connectivité temporaire est configuré pour le nom APN dans des informations d'abonnement de l'équipement UE.

21. Passerelle PGW selon la revendication 18, dans laquelle le type désigné implique en outre qu'il s'agisse d'une connexion de réseau PDN normale de l'équipement UE, l'équipement UE présentant un attribut de transmission de données non fréquente, et dans laquelle le premier module de détermination est en outre destiné à :
recevoir une notification en provenance de l'entité de commande de réseau central ; et
déterminer la connexion de réseau PDN correspondant à l'équipement UE comme étant la connexion de réseau PDN du type désigné, lorsque la notification comporte un second identifiant indiquant que l'équipement UE présente l'attribut de transmission de données non fréquente, et lorsque la connexion de réseau PDN correspondant à l'équipement UE est la connexion de réseau PDN normale de l'équipement UE.

22. Passerelle PGW selon la revendication 21, dans laquelle :
l'attribut de transmission de données non fréquente est configuré pour l'équipement UE dans des informations d'abonnement de l'équipement UE selon des exigences de l'équipement UE.
